# EUROPÄISCHE PATENTSCHRIFT

(11) **EP 2 613 950 B1**
(45) Veröffentlichungstag und Bekanntmachung des Hinweises auf die Patenterteilung: **13.08.2014**
(21) Anmeldenummer: 11752509.7
(22) Anmeldetag: 22.08.2011
(51) Int. Cl.: B60C 23/00

(54) **REIFENDRUCKREGELANLAGE MIT DREHDURCHFÜHRUNG**
TIRE PRESSURE CONTROL SYSTEM HAVING ROTARY FEEDTHROUGH
SYSTÈME DE RÉGULATION DE LA PRESSION DES PNEUS PRÉSENTANT UN PASSAGE TOURNANT

(30) Priorität: 06.09.2010 DE 202010008453 U
(43) Veröffentlichungstag der Anmeldung: 17.07.2013
(73) Patentinhaber: PTG Reifendruckregelsysteme GmbH, 41468 Neuss (DE)
(72) Erfinder: TIGGES, Martin, 41468 Neuss (DE)
(74) Vertreter: Haverkamp, Jens
(86) Internationale Anmeldenummer: PCT/EP2011/064365
(87) Internationale Veröffentlichungsnummer: WO 2012/031880

(56) Entgegenhaltungen:
- EP-A1- 1 095 799
- DE-C- 547 256
- DE-C- 827 605

## Beschreibung

Die Erfindung betrifft eine Reifendruckregelanlage für ein Kraftfahrzeug, umfassend eine einen Stator und einen Rotor aufweisende Drehdurchführung zum Übertragen von Druckluft, zugeführt von einer fahrzeugseitigen Druckluftquelle, an den zum Tragen eines Rades konzipierten Rotor, welche Drehdurchführung eine zwischen Rotor und Stator befindliche und durch aktivierbare Dichtungen abdichtbare Ringkammer aufweist, in die sowohl ein statorseitiger als auch ein rotorseitiger Luftkanal münden, wobei der von den aktivierten Dichtungen jeweils abgeschlossene Teil der Ringnut die Ringkammer bildet.

Reifendruckregelanlagen werden bei Kraftfahrzeugen, etwa bei Nutzfahrzeugen, wie Lastkraftwagen, Schleppern oder Erdbewegungsmaschinen eingesetzt, um den in dem Reifen befindlichen Reifendruck an unterschiedliche Betriebssituationen des Kraftfahrzeuges anpassen zu können. Eine Reifendruckanpassung erfolgt vornehmlich in Abhängigkeit von dem zu befahrenden Untergrund und/oder der Beladung. Durch den Reifendruck kann die Aufstandsfläche des Reifens verändert werden. Ein Reifen weist bei einem geringeren Reifendruck eine größere Aufstandsfläche auf als mit höherem Reifendruck. Aus diesem Grunde wird man bei weichem Untergrund lieber mit einem geringeren Reifendruck und mit höherer Aufstandsfläche fahren als auf einer befestigten Fahrbahn. Der Reifendruck kann auch in Abhängigkeit von dem jeweiligen Beladungszustand geändert werden.

Derartige Reifendruckregelanlagen verfügen über eine Drehdurchführung, um zum Erhöhen des Reifeninnendruckes Druckluft von einer fahrzeugseitigen Druckluftquelle an das drehbar gelagerte Rad zu übertragen. Eine solche Drehdurchführung umfasst einen fahrzeugseitig angeordneten Stator und einen durch einen Bewegungsspalt von diesem getrennten, radseitig angeordneten Rotor. Stator und Rotor sind axial zueinander und zur Drehachse des Rades angeordnet. Zur Druckluftübertragung verfügen Stator und Rotor über ringförmige einander bezüglich des Bewegungsspaltes gegenüberliegende und zueinander weisend offene Nuten oder Kammern, die durch aktivierbare Dichtungen, wie in EP 1 095 799 B1 beschrieben, für den Zeitpunkt der Druckluftübertragung zur Ausbildung einer Druckluftübertragungskammer abgedichtet werden. Radseitig ist an den Rotor der Drehdurchführung eine zur Felge des Rades führende Luftleitung vorgesehen. Diese durchgreift die Felge in einer Öffnung und mündet in das Reifeninnere. In die radseitige Luftleitung ist typischerweise ein ansteuerbares Ventil eingeschaltet, welches für den Vorgang der Reifendruckregelung geöffnet und nach Abschluss des Vorganges geschlossen ist. Die Druckluft selbst wird mit einem fahrzeugseitig angeordneten Kompressor bereitgestellt. Als Kompressor dient typischerweise der bei Nutzfahrzeugen ohnehin zum Betreiben der Bremsanlage vorhandene Kompressor.

In zunehmendem Maße werden Reifendruckregelanlagen auch bei Personenkraftfahrzeugen eingesetzt. Problematisch ist bei einem Einsatz derartiger Reifendruckregelanlagen bei Personenkraftwagen, dass im Unterschied zu Nutzfahrzeugen im Bereich der Nabe des Rades kaum Einbauraum zum Unterbringen einer Drehdurchführung zur Verfügung steht. Eingesetzt werden Reifendruckregelanlagen bei Personenkraftfahrzeugen vor allem auch vor dem Hintergrund, dass in Abhängigkeit von der Beladung ein jeweils optimaler Reifendruck bereitgestellt wird, um ein hinsichtlich des Rollwiderstandes möglichst optimales Abrollverhalten des Reifens zu erhalten, wodurch wiederum der Kraftstoffverbrauch verringert werden kann.

Auch wenn die aus EP 1 095 799 B1 bekannt gewordene Reifendruckregelanlage bei Nutzfahrzeugen problemlos eingesetzt werden kann, ist diese mitunter nicht kompaktbauend genug, um in einem Personenkraftfahrzeug eingesetzt werden zu können. Überdies nutzen sich bei den gegenüber Nutzfahrzeugen mit einer höheren Drehgeschwindigkeit drehenden Rotoren die daran anliegenden Dichtungen wegen der mit höherer Geschwindigkeit rotativ bewegten Rotoren rascher ab. Aufgrund der reibungsbedingten Erwärmung bei aktivierten Dichtungen kann es mitunter notwendig sein, für die Zwecke der Abdichtung der Druckluftübertragungskammer einen entsprechend hohen Druck anlegen zu müssen.

Eine Reifendruckregelanlage gemäß dem Oberbegriff des Anspruchs 1 ist aus DE 547 256 C bekannt. Die aus diesem Dokument bekannt gewordene Reifendruckregelanlage verfügt über eine Ringkammer, die zwischen einem statorseitigen Luftzugkanal und einem radseitigen Luftkanal angeordnet ist. Zum Abdichten in axialer Richtung dienen zwei Ringstreifen. Ist die Ringkammer druckbeaufschlagt, werden diese in axialer Richtung nach außen gegen die die Ringkammer in axialer Richtung einfassenden, rotorseitigen Seitenwände gedrückt. Hierdurch soll ein Entweichen von Luft aus der Ringkammer über das Lager verhindert werden. Eine Nutzung der Drehdurchführung gemäß diesem Stand der Technik ist nur beim Befüllen des Reifens möglich. Eine unabhängige Aktivierung der Dichtungen von einem Befüllvorgang ist bei dieser vorbekannten Reifendruckregelanlage nicht möglich.

Ausgehend von diesem diskutierten Stand der Technik liegt der Erfindung daher die Aufgabe zugrunde, eine Reifendruckregelanlage der eingangs genannten Art dergestalt zu verbessern, dass diese nicht nur geeignet ist, auch in den beengten Einbauverhältnissen eines Personenkraftfahrzeuges verbaut zu werden, sondern dass diese auch den Anforderungen an eine solche Drehdurchführung bei einem Personenkraftfahrzeugeinsatz und den Einsatz moderner Dichtungsmaterialien mit hoher Dichtwirkung bei niedriger Reibung, niedrigem Abrieb und gleichzeitig hoher Wärmebeständigkeit zu ermöglichen, genügt.

Gelöst wird diese Aufgabe erfindungsgemäß durch eine eingangs genannte, gattungsgemäße Reifendruckregelanlage,
bei der die für die Zwecke einer Druckluftübertragung aktivierbaren Dichtungen in einer axialen Anordnung mit gleichem oder etwa gleichem radialen Abstand von der Drehachse des Rotors beabstandet angeordnet sind und
bei der entweder die Dichtungen zueinander gerichtet arbeitend ausgelegt sind und bei der in eine zwischen den Dichtungen befindliche, in radialer Richtung zum Rotor hin offene Ringnut ein Rotorflansch eingreift, gegen dessen einander gegenüberliegende Außenseiten die Dichtungen, wenn aktiviert, zum Zwecke einer Abdichtung der Ringkammer wirken,
oder bei der die Dichtungen voneinander wegweisend arbeitend ausgelegt sind und die Dichtungen auf einem in eine Ringnut des Rotors eingreifenden Statorflansch angeordnet sind und, wenn aktiviert, zum Zwecke einer Abdichtung der Ringkammer gegen die einander gegenüberliegenden Nutwände der rotorseitigen Ringnut wirken.

Bei dieser Reifendruckregelanlage sind im Unterschied zu den Reifendruckregelanlagen gemäß dem Stand der Technik die Dichtungen in einer axialen Anordnung und nicht in einer radialen Anordnung zueinander positioniert. Dieses bedeutet, dass die Dichtungen einen gleichen oder zumindest etwa gleichen radialen Abstand von der Drehachse des Rotors aufweisen. Somit wirkt auf jede der beiden Dichtungen eines solchen Dichtungspaares die damit zusammenwirkende Dichtfläche des Rotors mit derselben Drehgeschwindigkeit. Demzufolge sind beide Dichtungen einer gleichen Erwärmung und einem gleichen Verschleiß unterworfen. Die axiale Anordnung der Dichtungen hat zur Folge, dass die Drehdurchführung aufgrund ihres geringen, in radialer Richtung benötigen Bauraumes ohne weiteres auch bei Kraftfahrzeugen mit geringem Einbauraum im Bereich des Rades bzw. der Nabe verbaut werden. Daher eignen sich diese Reifendruckregelanlagen und die diesbezüglichen Drehdurchführungen vor allem zur Verwendung in Personenkraftfahrzeugen.

Zum Ausbilden einer Ringkammer, in die die statorseitige und die rotorseitige Luftleitung münden und durch die, wenn abgedichtet, die Übertragung der Druckluft von dem Stator auf den Rotor erfolgt, kann durch zwei alternative Ausgestaltungen bereitgestellt werden. Die Ausgestaltungen unterscheiden sich in der Ausrichtung der Dichtungen hinsichtlich ihrer Wirkrichtung und den damit bedingten Unterschieden in der Auslegung der Drehdurchführung. Gemäß der ersten Alternative sind die Dichtungen aufeinander zu gerichtet arbeitend ausgelegt. Diese Dichtungen wirken in eine in radialer Richtung zum Rotor hin offene Ringnut. In diese Ringnut greift ein Rotorflansch ein, dessen parallele Außenseiten diejenigen Flächen bilden, gegen die die Dichtungen, wenn aktiviert, wirken. Bei dieser Ausgestaltung bildet der durch die aktivierten Dichtungen abgeschlossene Teil der Ringnut die Ringkammer, wobei die Ringkammer bei diesem Ausführungsbeispiel dem Stator zugeordnet ist. Bei dieser Ausgestaltung wirken die Dichtungen, wenn aktiviert, auf den Rotorflansch wie die Bremsbeläge auf die Scheibe einer Scheibenbremse.

Gemäß der zweiten Alternative sind die Dichtungen voneinander wegweisend arbeitend ausgelegt. Diese Dichtungen befinden sich auf einem Statorflansch, der wiederum in eine Ringnut des Rotors eingreift. Die Dichtungen wirken, wenn aktiviert, gegen die parallelen Wandungen der rotorseitigen Ringnut. Auch bei dieser Ausgestaltung ist die Ringkammer der von der aktivierten Dichtungen abgeschlossene Teil der Ringnut, die bei dieser Ausgestaltung dem Rotor zugeordnet ist.

Bei beiden Alternativen wirken die Dichtungen eines Dichtungspaares auf zwei zueinander parallele Flächen des Rotors - bei der ersten alternativen Ausgestaltung auf den Rotorflansch und bei der zweiten alternativen Ausgestaltung gegen die Nutwände. Diese Konzeption hat neben dem in radialer Richtung nur geringen Bauraumbedarf den Vorteil, dass das Aktivieren der Dichtungen in Bezug auf eine Kräfteeinleitung in das Radlager neutral erfolgt.

Von besonderem Vorteil bei der Konzeption der beschriebenen Drehdurchführung ist, dass, ohne einen in radialer Richtung größeren Einbauraum zu benötigen, in axialer Richtung hintereinander liegend auch zwei oder mehr Dichtungsanordnungen angeordnet sein können. Dieses ist beispielsweise erforderlich, wenn die Drehdurchführung zwei- oder mehrkanalig ausgeführt sein soll, wobei über den einen Kanal die Druckluft zum Befüllen oder Entleeren des Reifens und über den anderen Kanal die Steuerdruckluft zum Betätigen eines rotorseitig angeordneten Aktors übertragen wird. Selbst eine solche Ausgestaltung lässt sich ohne weiteres auch bei dem typischerweise geringeren, zur Verfügung stehenden Einbauraum bei Personenkraftfahrzeugen verwirklichen. Eine zweikanalige Drehdurchführung lässt sich mit drei Dichtungen realisieren. Dieses kann erreicht werden, wenn der eine Kanal gemäß der vorbeschriebenen ersten Alternative und der zweite Kanal gemäß der zweiten vorbeschriebenen Alternative ausgeführt sind. Diese Konzeption lässt sich mit nur drei Dichtungen verwirklichen, da die zwischen den beiden äußeren Dichtungen befindliche innenliegende Dichtung die Ringräume der beiden Kanäle voneinander trennt.

Weitere Vorteile und Ausgestaltungen der Erfindung ergeben sich aus der nachfolgenden Beschreibung von Ausführungsbeispielen unter Bezugnahme auf die beigefügten Figuren. Es zeigen:
- **Fig. 1:**: Eine Längsschnittdarstellung durch die Radnabe eines Personenkraftwagens mit einer Drehdurchführung gemäß einer ersten Ausgestaltung einer Reifendruckregelanlage,
- **Fig. 2:**: Einen Ausschnitt der Drehdurchführung der Reifendruckregelanlage der Figur 1 in einer vergrößerten Darstellung,
- **Fig. 3:**: Eine Längsschnittdarstellung durch die Radnabe eines Personenkraftwagens mit einer Drehdurchführung gemäß einer weiteren Ausgestaltung einer Reifendruckregelanlage und
- **Fig. 4:**: Eine vergrößerte Darstellung eines Ausschnittes der Drehdurchführung der Reifendruckregelanlage der Figur 3.

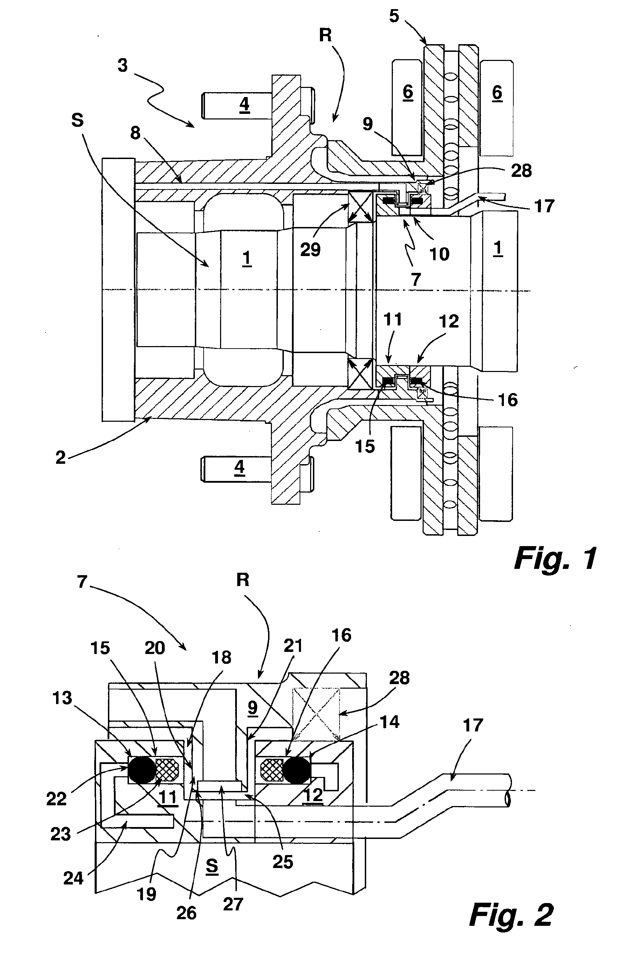

Ein im Übrigen nicht näher dargestelltes Kraftfahrzeug verfügt über einen in nicht näher dargestellter Weise an eine Antriebswelle angeschlossenen Achsstummel 1, auf dem eine Radnabe 2 drehbar gelagert ist. Auf der Radnabe 2 befindet sich ein Radsitz 3 mit mehreren umfänglich verteilt angeordneten Radbolzen 4. An die drehbar gegenüber dem Achsstummel 2 gelagerte Radnabe 3 ist eine Bremsscheibe 5 angeschlossen. Die mit der Bremsscheibe 5 arbeitenden Bremsbeläge sind in Figur 1 mit dem Bezugszeichen 6 gekennzeichnet.

Gegenüber dem Achsstummel 1 als Stator S bildet somit die aus Radnabe 2 und Bremsscheibe 5 gebildete Einheit einen Rotor R.

Das Kraftfahrzeug ist mit einer Reifendruckregelanlage ausgerüstet. Teil der Reifendruckregelanlage ist eine Drehdurchführung 7 zum Übertragen von Druckluft, die von einer fahrzeugseitigen Druckluftquelle zur Verfügung gestellt wird, auf den Rotor R. Zum Empfangen der übertragenen Druckluft verfügt der Rotor R über einen Luftkanal 8 der in nicht näher dargestellter Art und Weise Verbindung mit dem Inneren eines Reifens, montiert auf einem auf dem Radsitz 3 angeordneten Rad, hat. Die Drehdurchführung 7 umfasst einen im Querschnitt T-förmig konzipierten Ringkörper 9, der an das achsstummelseitige Ende der Radnabe 2 des Rotors R in nicht näher dargestellter Art und Weise angeschlossen ist, beispielsweise mittels Steckbolzen, Schrauben oder dergleichen. Dem Ringkörper 9 als Rotorteil der Drehdurchführung 7 zugeordnet ist ein Statorring 10, der starr auf der Außenseite des Achsstummels 1 sitzt. Der Statorring 10 des dargestellten Ausführungsbeispiels besteht aus zwei einzelnen Ringkörpern 11, 12, in denen jeweils eine umlaufende Nut 13, 14 zur Aufnahme jeweils einer aktivierbaren Ringdichtung 15, 16 dient. Die Nuten 13, 14 befinden sich in einem gleichen radialen Abstand von der Drehachse des Rotors R entfernt. Die darin eingesetzten Ringdichtungen 15, 16 arbeiten in Richtung aufeinander zu gerichtet. Angeschlossen ist der Statorring 10 an einen schematisiert dargestellten Luftkanal 17. Der Luftkanal 17 ist der fahrzeugseitige und damit statorseitige Luftkanal, über den bei einer Reifenbefüllung Druckluft zugeführt wird. Der Luftkanal 17 ist an eine nicht näher dargestellte Druckluftquelle angeschlossen.

Die Drehdurchführung 7 der Figur 1 ist in einer vergrößerten Darstellung in Figur 2 nochmals gesondert ohne Achsstummel 1 und Radnabe 2 gezeigt. Die beiden Ringkörper 11, 12 des Statorringes 10 fassen eine umlaufende, in radialer Richtung zu dem rotorseitigen Ringkörper 9 offene Ringnut 18 ein. In den die beiden zueinander weisenden Nutenwände bildenden Teilen des Statorringes 10 sind die umlaufenden Nuten 13, 14 für die Dichtungen 15, 16 eingebracht. In die Ringnut 18 taucht ein Rotorflansch 19 als Teil des rotorseitigen Ringkörpers 9 ein. Die beiden voneinander wegweisenden, parallelen Außenseiten 20, 21 des Rotorflansches 19 bilden die Rotorflächen, gegen die die Dichtungen 15, 16, wenn aktiviert, wirken.

Die Dichtungen 15, 16 sind gleich konzipiert. Im Folgenden ist die Dichtung 15 beschrieben. Die Dichtung 16 ist ebenso aufgebaut. Die Dichtung 15 ist in der Dichtnut 13 angeordnet und umfasst bei dem dargestellten Ausführungsbeispiel einen in radialer Richtung abgedichtet in derselben sitzenden Stellring 22 aus einem elastomeren Material. Bei dem dargestellten Ausführungsbeispiel handelt es sich hierbei um einen O-Ring. In Richtung zu dem Rotorflansch 19 ist weiteres Teil der Dichtung 15 ein Gleitring 23, der bei dem dargestellten Ausführungsbeispiel als Teflonring ausgeführt ist. Die Dichtnut 13 ist angeschlossen an eine Steuerleitung 24, die in nicht näher dargestellter Art und Weise an eine pneumatische Steuereinrichtung angeschlossen ist. Ist die Steuerleitung 24 druckbeaufschlagt, wird der Stellring 22 aus seiner in Figur 2 gezeigten Stellung in Richtung zu dem Rotorflansch 19 bewegt und drückt den Gleitring 23 gegen die Außenseite 20 des Rotorflansches 19. Da die Dichtnut 14 bezüglich der Steuerleitung 24 parallel geschaltet ist, werden beide Dichtungen 15, 16 gleichzeitig aktiviert. Sind die Dichtungen 15, 16 aktiviert, ist der untere, zu dem Statorring 10 weisende Abschnitt der Ringnut 18 abgedichtet. Dieser Teil der Ringnut 18 bildet eine Ringkammer 25 aus, über die Druckluft von dem Statorring 10 in den Rotorkörper 9 übertragen werden kann. Der Luftkanal 17 mündet bei dem dargestellten Ausführungsbeispiel in radialer Richtung in die Ringkammer 25. Der rotorseitige Luftkanal 8, der in der Radnabe 2 des dargestellten Ausführungsbeispiels der Figur 1 eine axiale Erstreckung aufweist, setzt sich fort in den Rotorkörper 9 und mündet nach einer Abwinklung ebenfalls in radialer Richtung in die Ringkammer 25. In die in die Ringnut 18 weisende Stirnfläche 26 des Rotorflansches 19 ist umlaufend ein Sammelkanal 27 eingebracht. Dieser weist bei dem dargestellten Ausführungsbeispiel eine rechteckförmige Querschnittsfläche auf. Durch den umlaufenden Sammelkanal 27 ist die für die Zwecke der Druckluftübertragung wirksame Querschnittsfläche der Ringkammer 25 vergrößert.

Anstelle des Vorsehens von zweiteiligen Dichtungen - wie vorbeschrieben - ist es ebenfalls möglich, einstückige Dichtungen einzusetzen. Diese können materialhomogen oder auch als Verbundringe, etwa mit einer Materialkombination des beschriebenen Ausführungsbeispiels ausgeführt sein.

Für die Zwecke zum Übertragen von Druckluft von dem Statorring 10 auf den rotorseitigen Ringkörper 9 werden die Dichtungen 15, 16 aktiviert, wodurch die Ringkammer 25 gegenüber den übrigen Abschnitten der Ringnut 18 und damit gegenüber der Umwelt abgedichtet ist. Anschließend wird Druckluft vom Fahrzeug in den Reifen des Rades übertragen. Nach erfolgter Druckluftübertragung werden die Dichtungen 15, 16 deaktiviert, und zwar durch Drucklosschalten der Steuerleitung 24. Die Dichtungen 15, 16 arbeiten in Bezug auf den Rotorflansch zangenartig, sodass durch die an die Außenseiten 20 bzw. 21 angelegten Dichtungen 15 bzw. 16 in Folge der gleichzeitigen und kräftegleichen Beaufschlagung der Dichtungen 15, 16 dieses nicht zu einer Belastung des Radlagers führt. Dieses ist nicht unwesentlich, da die Steuerleitung 24 zum Aktivieren der Dichtungen 15, 16 durchaus mit 3 bar oder mehr beaufschlagt werden.

Um ein Eindringen von Verschmutzungen in die Ringnut 18 von Außen zu verhindern, ist der zwischen Rotor und Stator der Drehdurchführung 7 befindliche Bewegungsspalt durch entsprechende Schmutzabdichtungen 28, 29 (siehe Figur 1) verschlossen.

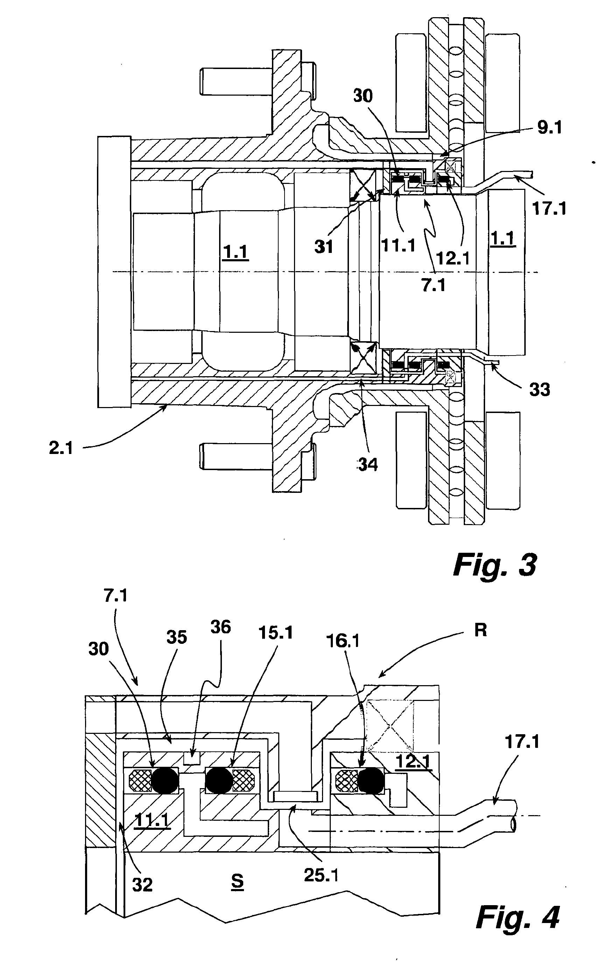

Figur 3 zeigt eine Radlageranordnung, wie diese grundsätzlich in Figur 1 dargestellt ist, gemäß einer weiteren Ausgestaltung einer Drehdurchführung einer Reifendruckregelanlage. Die Reifendruckregelanlage des Ausführungsbeispiels der Figur 2 ist zweikanalig konzipiert. Der erste Kanal der Reifendruckregelanlage arbeitet so wie dieses vorstehend zu dem Ausführungsbeispiel der Figur 1 beschrieben worden ist. Der zweite Kanal ist ein Steuerkanal zum Ansteuern eines dem Rad zugeordneten Aktors.

Hierbei kann es sich beispielsweise um ein ansteuerbares Ventil handeln, durch welches bei entsprechender Betätigung Luft aus dem Reifeninneren abgelassen werden kann. Zum Erleichtern der Übersicht dieses weiteren Ausführungsbeispieles tragen in den Figuren 3 und 4 gleiche Elemente, die bereits zu dem Ausführungsbeispiel der Figuren 1 und 2 beschrieben worden sind, gleiche Bezugszeichen, ergänzt um ".1 ".

In figur 3 ist in der Drehdurchführung 7.1 die Druckluftübertragung zum Befüllen eines Reifens mit seinem statorseitigen Luftkanal 17.1 oberhalb der Drehachse gezeigt. Im Unterschied zu der Ausgestaltung des Ringkörpers 11, trägt der Ringkörper 11.1 des Ausführungsbeispiels der Figuren 3 und 4 neben der Dichtung 15.1 eine weitere Dichtung 30, die in Bezug auf die Dichtung 15.1 von dieser wegweisenden arbeitend ausgelegt ist. Zum Zusammenwirken mit der Dichtung 30 dient ein zweiter Rotorflansch 31, gegen dessen zu dem Ringkörper 11 weisende Seite die Dichtung 30, wenn aktiviert, wirkt. Somit sind die Dichtungen 15.1 und 30 in einem in radialer Richtung nach außen abragenden Statorflansch angeordnet, der in eine umlaufende Ringnut 32 des Rotorkörpers 9.1 eintaucht. In diese Ringnut 32 mündet in radialer Richtung außerhalb der Dichtungen 15, 15.1 eine Steuerleitung 33. Zur Aufnahme eines pneumatischen Steuersignals verfügt die Radnabe 2.1 über einen Steuerkanal 34. Dieser führt zu einem am Rad befindlichen Aktor. Die statorseitige Steuerleitung 33 ist in nicht näher dargestellter Art und Weise an ein pneumatisches Steuergerät zum Ansteuern des Aktors angeschlossen.

Die Drehdurchführung 7.1 ist in einer vergrößerten Darstellung nochmals in Figur 4 wiedergegeben. Sind die Dichtungen 15.1 und 30 aktiviert, wird durch diese der radial äußere Teil der Ringnut 32 abgedichtet. Dieser Teil der Ringnut 32 bildet sodann die für die Zwecke der Druckluftübertragung vorgesehene Ringkammer 35. Zur Vergrößerung des Querschnittes derselben ist in die radiale Außenseite des Ringkörpers 11.1 ein Sammelkanal 36 eingebracht. In diesen mündet, wie aus Figur 3 ersichtlich, die statorseitige Steuerleitung 33, und zwar in radialer Richtung. Gleichfalls mündet der rotorseitige Steuerkanal 34 in radialer Richtung in die Ringkammer 35 (siehe Figur 3).

Die Dichtungen 16.1, 15.1 und 30 der Drehdurchführung 7 sind parallel an eine Steuerleitung zum Aktivieren derselben angeschlossen. Daher wirken die Dichtungen 16.1, 15.1 und 30 gleichzeitig auf die diesen jeweils zugeordneten Rotorflächen mit jeweils gleichem Anpressdruck. Somit können gleichzeitig pneumatische Steuersignale und Druckluft vom Fahrzeug an das Rad übertragen werden, sodass eine effektive Reifendruckregelung mit einer Reifendruckerniedrigung und einer Reifendruckerhöhung möglicht ist.

Aus den dargestellten Ausführungsbeispielen wird deutlich, dass die jeweils paarweise zusammenwirkenden Dichtungen 15, 16 sowie 15.1, 16.1 sowie 15.1 und 30 jeweils in einer axialen Anordnung zueinander stehen. Diese weisen jeweils einen gleichen radialen Abstand von der Drehachse der Radnabe auf. Die beschriebenen Drehdurchführungen machen anschaulich, dass für die für die Reifendruckregelung notwendige Druckluftübertragung in radialer Richtung kaum Einbauraum benötigt wird.

Das Ausführungsbeispiel der Figuren 3 und 4 macht deutlich, dass die Dichtung 15.1 als innenliegende, zwischen den Dichtungen 16.1 und 30 liegende Dichtung zur Abdichtung beider Ringkammern 35, 25.1 dient und somit doppelt genutzt ist.

Es versteht sich, dass bei einer mehr als zweikanaligen Drehdurchführung sich die in dem Ausführungsbeispiel der Figuren 3 und 4 in axialer Richtung gezeigte Anordnung wiederholen kann.

Die Anordnung der Dichtungen 15, 16 bzw. 15.1, 16.1 und 30 in nur geringem Abstand zur Außenseite des Achsstummels 1 bzw. 1.1 machen zudem deutlich, dass diese an einer Stelle positionierbar sind, an der die effektive Drehgeschwindigkeit der rotorseitigen Dichtflächen bzw. der derjenigen Abschnitte, gegen den die Dichtungen wirken, relativ gering ist, verglichen mit Positionen der Dichtungen, wenn diese mit einem größeren radialen Abstand von der Drehachse angeordnet sind.

Ohne den Umfang der Ansprüche zu verlassen ergeben sich für einen Fachmann zahlreiche weitere Ausgestaltungen, die Erfindung verwirklichen zu können, ohne dass dieses im einzelnen näher dargelegt werden müsste.

### Bezugszeichenliste

- 1: Achsstummel
- 2: Radnabe
- 3: Radsitz
- 4: Radbolzen
- 5: Bremsscheibe
- 6: Bremsbelag
- 7: Drehdurchführung
- 8: Luftkanal
- 9: Ringkörper
- 10: Statorring
- 11: Ringkörper
- 12: Ringkörper
- 13: Nut
- 14: Nut
- 15: Ringdichtung
- 16: Ringdichtung
- 17: Luftkanal
- 18: Ringnut
- 19: Rotorflansch
- 20: Außenseite
- 21: Außenseite
- 22: Stellring
- 23: Gleitring
- 24: Steuerleitung
- 25: Ringkammer
- 26: Stirnfläche
- 27: Sammelkanal
- 28: Schmutzabdichtung
- 29: Schmutzabdichtung
- 30: Dichtung

- 31: Rotorflansch
- 32: Ringnut
- 33: Steuerleitung
- 34: Steuerkanal
- 35: Ringkammer
- 36: Sammelkanal
- R: Rotor
- S: Stator

## Patentansprüche

1. Reifendruckregelanlage für ein Kraftfahrzeug, umfassend eine einen Stator (S) und einen (R) Rotor aufweisende Drehdurchführung (7, 7.1) zum Übertragen von Druckluft, zugeführt von einer fahrzeugseitigen Druckluftquelle, an den zum Tragen eines Rades konzipierten Rotor (R), welche Drehdurchführung (7, 7.1) eine zwischen Rotor (R) und Stator (S) befindliche und durch eine pneumatische Steuereinrichtung über eine Steuerleitung (24) aktivierbare und in jeweils einer Nut (13, 14) aufgenommene Ringdichtungen (15, 16; 15.1, 16.1; 15.1, 30) abdichtbare Ringkammer (25, 25.1, 35) aufweist, in die sowohl ein statorseitiger als auch ein rotorseitiger Luftkanal (8, 17; 17.1) münden, wobei der von den aktivierten Dichtungen (15, 16; 15.1, . 16.1; 15.1, 30) jeweils abgeschlossene Teil der Ringnut (18, 32) die Ringkammer (25, 25.1, 35) bildet, **dadurch gekennzeichnet,**
**dass** die für die Zwecke einer Druckluftübertragung aktivierbaren Dichtungen (15, 16; 15.1, 16.1; 15.1, 30) in einer axialen Anordnung mit gleichem oder etwa gleichem radialen Abstand von der Drehachse des Rotors (R) beabstandet angeordnet sind und
**dass** entweder die Dichtungen (15, 16; 15.1, 16.1) zueinander gerichtet arbeitend ausgelegt sind und dass in eine zwischen den Dichtungen (15, 16; 15.1, 16.1) befindliche, in radialer Richtung zum Rotor (R) hin offene Ringnut (18) ein Rotorflansch (19) eingreift, gegen dessen einander gegenüberliegende Außenseiten (20, 21) die Dichtungen (15, 16; 15.1, 16.1), wenn aktiviert, zum Zwecke einer Abdichtung der Ringkammer (25, 25.1) wirken,
oder dass die Dichtungen (15.1, 30) voneinander wegweisend arbeitend ausgelegt sind und die Dichtungen (15.1, 30) auf einem in eine Ringnut (32) des Rotors (R) eingreifenden Statorflansch angeordnet sind und, wenn aktiviert, zum Zwecke einer Abdichtung der Ringkammer (35) gegen die einander gegenüberliegenden Nutwände der rotorseitigen Ringnut (32) wirken.

2. Reifendruckregelanlage nach Anspruch 1, **dadurch gekennzeichnet, dass** die Luftkanäle (8, 17; 17.1) in radialer Richtung in die Ringkammer (25, 35) münden.

3. Reifendruckregelanlage nach Anspruch 2, **dadurch gekennzeichnet, dass** der Rotorflansch (19) einen zu dem Fuß der Ringnut (25) des Stators (S) weisenden umlaufende Sammelkanal (27) aufweist, in den der rotorseitige Luftkanal (8) mündet.

4. Reifendruckregelanlage nach Anspruch 3, **dadurch gekennzeichnet, dass** der rotorseitige Luftkanal (8) in radialer Richtung in den Sammelkanal (27) mündet.

5. Reifendruckregelanlage nach einem der Ansprüche 1 bis 4, **dadurch gekennzeichnet, dass** der Rotorflansch (19) als ein im Querschnitt T-förmig ausgeführter Ringkörper mit einem axial ausgerichteten Luftkanalabschnitt ausgeführt ist.

6. Reifendruckregelanlage nach einem der Ansprüche 1 bis 5, **dadurch gekennzeichnet, dass** jede aktivierbare Dichtung (15, 16; 15.1, 16.1; 15.1, 30) einen in einer ringförmigen Dichtnut (13, 14) abgedichtet angeordneten Stellring (22) und eine in Richtung zum Ausgang der Dichtnut (13, 14) vor diesem befindlichen Gleitring (23) umfasst.

7. Reifendruckregelanlage nach einem der Ansprüche 1 bis 6, **dadurch gekennzeichnet, dass** die Drehdurchführung (7.1) zweikanalig mit einem Kanal zum Übertragen von Druckluft für eine Reifenbefüllung und mit einem zweiten Kanal zum Übertragen von Steuerluft zum Ansteuern eines dem Rotor (R) zugeordneten Aktors ausgeführt ist.

8. Reifendruckregelanlage nach Anspruch 7, **dadurch gekennzeichnet, dass** der Kanal der Drehdurchführung (7.1) zum Übertragen von Druckluft an den Rotor (R) zum Zwecke einer Reifenbefüllung gemäß der ersten Alternative des Anspruchs 1 und dass der zum Übertragen der Steuerluft vorgesehene Kanal gemäß der zweiten Alternative des Anspruchs 1 ausgeführt sind, wobei die Drehdurchführung (7.1) in einer axialen Anordnung zueinander zwei außenliegende und eine innenliegende Dichtungen (15.1, 16.1, 30) umfasst, welche innenliegende Dichtung (15.1), wenn aktiviert, die Ringkammern der beiden Kanäle voneinander trennt.

## Claims

1. Tire pressure control system for a motor vehicle, comprising a rotary feedthrough (7, 7.1) having a stator (5) and a rotor (R) for transferring compressed air, fed from a compressed air source on the vehicle side, designed for supporting a wheel, said rotary feedthrough (7, 7.1) comprising an annular chamber (25, 25.1, 35) present between the rotor (R) and stator (S) that can be sealed off by activatable ring seals (15, 16; 15.1, 16.1; 15.1, 30), which are activatable by a pneumatic control device via a control line (24) and in each case accommodated in a groove (13, 14), into which an air channel (8, 17; 17.1) on both the stator side as well as on the rotor side opens, wherein the part of the annular groove (18, 32) which in each case is closed by the activated seals (15, 16; 15.1,16.1; 15.1, 30) forms the annular chamber (25, 25.1, 35) **characterised in that**
the seals (15, 16; 15.1, 16.1; 15.1, 30) which can be activated for the purpose of compressed air transfer are disposed spaced apart in an axial arrangement having the same or approximately the same spacing from the rotary axis of the rotor (R), and
that either the seals (15, 16; 15.1, 16.1) are arranged for operating facing each other and an annular groove (18) present between the seals (15, 16; 15.1, 16.1) and open to the rotor (R) in the radial direction engages a rotor flange (19), against the mutually opposed outer sides (20, 21) of which the seals (15, 16; 15.1, 16.1), when activated, take effect for the purpose of sealing the annular chamber (25, 25.1),
or that the seals (15.1, 30) are arranged for operating facing away from one another and the seals (15.1, 30) are disposed on a stator flange engaging in an annular groove (32) of the rotor (R) and, when activated, act for the purpose of sealing the annular chamber (35) against the mutually opposed groove walls of the rotor-side annular groove (32).

2. Tire pressure control system according to claim 1, **characterised in that** the air channels (8, 17; 17.1) open in the radial direction into the annular chamber (25, 35).

3. Tire pressure control system according to claim 2, **characterised in that** the rotor flange (19) comprises a circumferential collection channel (27) facing towards the foot of the annular groove (25) of the stator (S), into which the rotor-side air channel (8) opens.

4. Tire pressure control system according to claim 3, **characterised in that** the rotor-side air channel (8) opens in the radial direction into the collection channel (27).

5. Tire pressure control system according to any one of claims 1 to 4, **characterised in that** the rotor flange (19) is disposed as an annular body arranged in T-shape in cross-section, with an axially-aligned air channel section.

6. Tire pressure control system according to any one of claims 1 to 5, **characterised in that** each activatable seal (15, 16; 15.1, 16.1; 15.1, 30) comprises a setting ring (22) arranged sealed in an annular sealing groove (13, 14) and a slide ring (23) located in front of this in the direction towards the outlet of the sealing groove (13, 14).

7. Tire pressure control system according to any one of claims 1 to 6, **characterised in that** the rotary feedthrough (7.1) is disposed as being two-channel, with one channel for transferring compressed air for tire filling, and a second channel for transferring control air for the activation of an actuator allocated to the rotor (R).

8. Tire pressure control system according to claim 7, **characterised in that** the channel of the rotary feedthrough (7.1) is disposed for transferring compressed air to the rotor (R) for the purpose of tire filling in accordance with the first alternative of claim 1, and that the channel provided for transferring the control air is disposed in accordance with the second alternative of claim 1, wherein the rotary feedthrough (7.1) comprises, in an axial arrangement to one another, two outside seals and one inside seal (15.1, 16.1, 30), said inside seal (15.1), when activated, separating the annular chambers of the two channels.

## Revendications

1. Système de régulation de la pression des pneus pour un véhicule à moteur, présentant un passage tournant (7, 7.1) comprenant un stator (S) et un rotor (R), destiné à transférer de l'air comprimé provenant d'une source d'air comprimé sur le véhicule, vers le rotor (R) conçu pour supporter une roue, lequel passage tournant (7, 7.1) présente une chambre toroïdale (25, 25.1, 35), située entre le rotor (R) et le stator (S), activable par un équipement de commande pneumatique à l'aide d'une ligne de commande (24), et dont l'étanchéité peut être réalisée par des joints toriques (15, 16 ; 15.1, 16.1 ; 15.1, 30) respectivement logés dans une rainure (13, 14), et dans laquelle chambre toroïdale (25, 25.1, 35) débouchent des canaux d'air (8, 17 ; 17.1) provenant du stator ainsi que du rotor ; la partie de la rainure annulaire (18, 32) fermée par les joints (15, 16 ; 15.1, 16.1 ; 15.1, 30) activés formant la chambre toroïdale (25, 25.1, 35), **caractérisé en ce que**,
les joints (15, 16 ; 15.1, 16.1 ; 15.1, 30) activables à des fins de transfert de l'air comprimé, sont disposés axialement à un intervalle radial identique ou sensiblement identique par rapport à l'axe de rotation du rotor (R) et
**en ce que** les joints (15, 16 ; 15.1, 16.1) sont soit conçus pour travailler orientés l'un vers l'autre et qu'une bride rotorique (19) située entre les étanchéités (15, 16 ; 15.1, 16.1) s'engage dans une rainure annulaire (18) ouverte dans le sens radial vers le rotor (R), et contre lesquelles faces extérieures (20, 21) opposées de ladite bride rotorique (19) agissent les joints (15, 16 ; 15.1, 16.1), quand ils sont activés, dans le but de réaliser l'étanchéité de la chambre toroïdale (25, 25.1), ou
**en ce que** les joints (15.1, 30) sont conçus pour travailler en se détournant l'un de l'autre et que les joints (15.1, 30) sont disposés sur une bride statorique s'engageant dans une rainure annulaire (32) du rotor (R) et qu'ils agissent, quand ils sont activés, dans le but de réaliser l'étanchéité de la chambre toroïdale (35), contre les parois de rainure opposées de la rainure annulaire (32) du rotor.

2. Système de régulation de la pression des pneus selon la revendication 1, **caractérisé en ce que** les canaux d'air (8, 17 ; 17.1) débouchent selon une orientation radiale dans la chambre toroïdale (25, 35).

3. Système de régulation de la pression des pneus selon la revendication 2, **caractérisé en ce que** la bride rotorique (19) présente un canal collecteur (27) périphérique orienté vers la base de la rainure annulaire (25) du stator (S), dans lequel débouche le canal d'air (8) du rotor.

4. Système de régulation de la pression des pneus selon la revendication 3, **caractérisé en ce que** le canal d'air (8) du rotor débouche dans le sens radial dans le canal collecteur (27).

5. Système de régulation de la pression des pneus selon l'une des revendications 1 à 4, **caractérisé en ce que** la bride rotorique (19) est conformée en tant que corps circulaire, doté d'une section en forme de T, avec un tronçon de canal d'air orienté axialement.

6. Système de régulation de la pression des pneus selon l'une des revendications 1 à 5 **caractérisé en ce que** chaque joint (15, 16 ; 15.1, 16.1 ; 15.1, 30) activable comprend une bague de réglage (22) disposée de façon étanche dans une rainure d'étanchéité (13, 14) de forme annulaire et une bague de glissement (23) se trouvant vers la sortie de la rainure d'étanchéité (13, 14), avant celle-ci.

7. Système de régulation de la pression des pneus selon l'une des revendications 1 à 6, **caractérisé en ce que** le passage tournant (7.1) est conformé en double canal, avec un canal destiné à transmettre l'air comprimé pour le gonflage du pneu et avec un second canal destiné à transmettre l'air de commande afin de commander un actionneur affecté au rotor (R).

8. Système de régulation de la pression des pneus selon la revendication 7, **caractérisé en ce que** le canal du passage tournant (7.1) destiné à transmettre de l'air comprimé au rotor (R) afin de gonfler le pneu selon la première alternative de la revendication 1 et le canal prévu pour transmettre l'air de commande selon la seconde alternative de la revendication 1 sont conformés de telle sorte que le passage tournant (7.1) comprend, dans une disposition axiale les uns par rapport aux autres, des joints (15.1, 16.1, 30) dont deux sont externes et un interne, lequel joint interne (15.1), quand il est activé, sépare les chambres circulaires des deux canaux l'une de l'autre.
